# FASCICULE DE BREVET EUROPEEN

(11) **EP 2 614 630 B1**
(45) Date de publication et mention de la délivrance du brevet: **15.08.2018**
(21) Numéro de dépôt: 11764822.0
(22) Date de dépôt: 31.08.2011
(51) Int. Cl.: H04L 29/12, H04L 29/08, H04L 12/28

(54) **TRAITEMENT DE DONNÉES POUR LA NOTIFICATION D'UN ÉQUIPEMENT**
VERARBEITUNG VON DATEN ZUR BENACHRICHTUNG EINER VORRICHTUNG
PROCESSING OF DATA FOR THE NOTIFICATION OF A DEVICE

(30) Priorité: 07.09.2010 FR 1057105
(43) Date de publication de la demande: 17.07.2013
(73) Titulaire: Orange, 75015 Paris (FR)
(72) Inventeur: BAFCOP, Alexis, 35000 Rennes (FR); LE BER, Erwan, F-22300 Lannion (FR)
(74) Mandataire: Cabinet Plasseraud
(86) Numéro de dépôt international: PCT/FR2011/051997
(87) Numéro de publication internationale: WO 2012/032248

(56) Documents cités:
- WO-A1-2009/053208
- US-A1- 2004 139 227
- NAKAJIMA T ET AL: "A virtual overlay network for integrating home appliances", 28 janvier 2002 (2002-01-28), SYMPOSIUM ON APPLICATIONS AND THE INTERNET, 2002. (SAINT 2002). PROCEEDINGS. 2002 . NARA, JAPAN 28 JAN.-1 FEB. 2002, LOS ALAMITOS, CA, USA,IEEE COMPUT. SOC, US, PAGE(S) 246 - 253, XP010587849, ISBN: 978-0-7695-1447-5 Paragraphe 3.
- Daniel Solin: "Generating One-Time URLs with PHP", , 12 mai 2002 (2002-05-12), pages 1-5, XP002633085, Extrait de l'Internet: URL:http://onlamp.com/pub/a/php/2002/12/05 /one_time_URLs.html [extrait le 2011-04-14]

## Description

La présente invention vise un procédé de notification d'un équipement.

En particulier, l'invention vise un procédé de notification d'un équipement d'un réseau privé, connecté au réseau Internet via une passerelle Internet.

Il peut être intéressant pour un utilisateur d'un équipement d'un réseau privé, par exemple un équipement de type décodeur vidéo STB (pour « Set-Top Box »), de pouvoir transmettre une commande à son équipement lorsqu'il n'est pas chez lui. L'utilisateur peut par exemple vouloir programmer l'enregistrement d'une émission de télévision, à partir de son décodeur STB, pendant qu'il est en voyage.

L'équipement est connecté à une passerelle Internet, par exemple de type Livebox. Il est ainsi possible de transmettre une notification à l'équipement depuis une plateforme de service connectée au réseau Internet mais n' appartenant pas au réseau privé.

Un procédé de notification doit notamment permettre la gestion de la traversée d'un routeur NAT (Network Address Translation). Le routeur NAT, qui appartient au réseau privé, a pour fonction de faire correspondre les adresses IP internes du réseau privé à un ensemble d'adresses utilisables sur le réseau Internet.

Pour gérer la traversée du routeur NAT, on peut utiliser par exemple le protocole SNMP (Simple Network Management Protocol). Cependant, cette solution est peu performante. On peut en variante utiliser un protocole de type Websocket, une technologie d'attente active de type http long polling, ou un protocole de type STUN (Simple Traversai of UDP through NATs, avec UDP pour « User Datagram Protocol »). Cependant, ces solutions sont très couteuses en ressource, car elles nécessitent de garder des connections établies entre chaque plateforme de service (PFS) et chaque équipement.

De plus, un procédé de notification doit également permettre la gestion de l'écoute de l'équipement, et du routage de la notification vers l'équipement. La fonction d'écoute de l'équipement est en général réalisée par un récepteur appelé listener. Le routage des notifications peut être réalisé à l'aide d'un serveur connecté au réseau Internet et d'un logiciel, appelé client, mis en oeuvre dans l'équipement.

Un inconvénient des procédés de notification connus est qu'ils sont généralement spécifiquement adaptés à un équipement et à un service.

La présente invention vient améliorer la situation.

La demande de brevet US2004/0139227 présente une méthode d'adressage d'un dispositif électronique dans un réseau privé.

A cet effet, l'invention propose un procédé de traitement de données pour la notification d'au moins un équipement d'un réseau privé, connecté au réseau externe via une passerelle locale, caractérisé en ce qu'il comprend des étapes :
dans une plateforme de service hébergeant un service :
a) déterminer un identifiant caractérisant une paire formée par le service et par au moins un équipement destinataire, et
b) transmettre l'identifiant déterminé à un serveur central de notification comportant une base de données, dans laquelle sont mémorisés des identifiants et des adresses de joignabilité associées, dans ledit serveur central de notification :
c) comparer l'identifiant reçu de la plateforme de service aux identifiants mémorisés dans la base de données, pour déterminer une adresse de joignabilité associée à un identifiant mémorisé correspondant à l'identifiant reçu, et
d) transmettre un message de notification, à travers le réseau externe, à l'équipement présentant l'adresse de joignabilité.

L'utilisation d'un tel identifiant pour assurer le routage peut simplifier l'ajout de nouveaux équipements et/ou de nouveaux services. De plus, l'utilisation d'un serveur central de notification permet de réduire l'impact sur les plateformes de service, car les étapes complexes (notamment la gestion des aspects réseau d'accès à l'équipement, par exemple la traversée du routeur NAT) sont déléguées au serveur central.

Un identifiant est par exemple déterminé par l'application d'une fonction de hachage à la concaténation d'une chaine de caractères alpha numériques caractérisant un service et d'une chaîne de caractères alpha numériques caractérisant un équipement. Un tel identifiant présente notamment l'avantage d'être flexible, ouvert et évolutif.

La passerelle locale peut comporter un routeur NAT permettant de faire correspondre des adresses IP internes du réseau privé à un ensemble d'adresses utilisables sur le réseau externe, le procédé comprenant une étape préalable d'initialisation de l'équipement, comportant une opération de mémorisation dans l'équipement d'une adresse IP publique et d'un numéro de port, de la passerelle locale.

Le procédé peut également comprendre une étape préalable d'enregistrement de l'équipement au service hébergé par la plateforme de service, l'étape d'enregistrement comportant une opération de détermination, dans l'équipement, d'une adresse de joignabilité de l'équipement, et d'un identifiant caractérisant une paire formée par le service et par l'équipement, une opération d'émission depuis l'équipement, à destination du serveur central de notification, d'une requête d'enregistrement au service comportant l'identifiant déterminé et l'adresse de joignabilité.

L'adresse de joignabilité peut être formée à partir d'une adresse IP publique, d'un numéro de port, et d'une partie aléatoire. Ainsi, il n'est pas nécessaire d'utiliser une autre adresse IP publique et/ou un autre numéro de port pour ouvrir un deuxième chemin réseau dans le cas d'un enregistrement à plusieurs services. En effet, il est possible de réutiliser la même adresse IP publique et le même numéro de port et de changer la partie aléatoire. L'adresse de joignabilité peut être une adresse URL.

L'équipement peut être un décodeur vidéo. Le procédé est bien adapté au domaine des offres de TV par internet car elles impliquent de nombreuses notifications d'autres services (SAV, Configuration, Notification d'appel, programmation d'enregistrement, mise à jour de programme TV, etc.).

Le procédé peut être mis en oeuvre en réponse à une commande d'un utilisateur, la commande étant transmise à la plateforme de service via le réseau externe.

De préférence, le procédé comprend une opération préalable d'authentification de l'utilisateur auprès d'un outil d'authentification. Il est ainsi possible de garantir, par l'authentification, que l'utilisateur ayant commandé la notification est bien le propriétaire de l'équipement.

L'équipement peut être un premier équipement, l'identifiant déterminé à l'étape a) caractérisant, outre le premier équipement, un deuxième équipement, l'étape c) comportant en outre la détermination d'une deuxième adresse de joignabilité pour ledit deuxième équipement, et l'étape d) comportant en outre la transmission de la notification à destination dudit deuxième équipement en utilisant ladite deuxième adresse de joignabilité. Il est ainsi possible de réaliser une notification multicast de manière simple en utilisant l'identifiant comme clé de routage intelligente.

Les étapes de calcul du procédé peuvent être réalisées par un programme informatique. L'invention vise donc également un programme informatique comportant des instructions pour la mise en oeuvre du procédé de notification lorsque ce programme est exécuté par un processeur.

Le procédé peut être mis en oeuvre dans des dispositifs spécifiques. L'invention vise donc également un serveur central de notification comportant :
- une base de données, dans laquelle sont mémorisés des identifiants et des adresses de joignabilité associées, un identifiant mémorisé caractérisant une paire formée par un service et par un équipement,
- des moyens de réception configurés pour recevoir, d'une plateforme de service, un identifiant caractérisant une paire formée par un service et par un au moins un équipement destinataire,
- des moyens de comparaison configurés pour comparer un identifiant reçu de la plateforme de service avec lesdits identifiants mémorisés dans ladite base de données, pour déterminer une adresse de joignabilité associée à un identifiant mémorisé correspondant à l'identifiant reçu, et
- des moyens de transmission configurés pour transmettre un message de notification à destination de l'équipement présentant ladite adresse de joignabilité.

L'invention vise également un système comportant :
- un serveur central de notification,
- un équipement d'un réseau privé, connecté à un réseau externe via une passerelle locale, et
- une plateforme de service hébergeant un service et comportant :
   des moyens de détermination configurés pour déterminer un identifiant caractérisant une paire formée par ledit service et par au moins un équipement destinataire, et
   des moyens de transmission configurés pour transmettre ledit identifiant déterminé à destination dudit serveur central de notification.

D'autres caractéristiques et avantages de l'invention apparaîtront encore à la lecture de la description qui va suivre. Celle-ci est purement illustrative et doit être lue en regard des dessins annexés sur lesquels :
- la Figure 1 est un schéma fonctionnel montrant un réseau de télécommunication comportant notamment un serveur central de notification selon un mode de réalisation de l'invention ;
- la Figure 2 est un organigramme illustrant les étapes d'un procédé d'initialisation d'un équipement selon un mode de réalisation de l'invention ;
- la Figure 3 est un schéma fonctionnel représentant des transmissions de données entre un équipement, une passerelle Internet, un serveur central de notification et une plateforme de service ;
- la Figure 4 est un organigramme illustrant les étapes d'un procédé d'enregistrement d'un équipement à un service selon un mode de réalisation de l'invention ;
- la Figure 5 est un organigramme illustrant les étapes d'un procédé de notification, cet organigramme pouvant représenter l'algorithme général du programme informatique au sens de l'invention ;
- la Figure 6 est un schéma fonctionnel montrant le serveur central de notification du réseau de télécommunication de la figure 1 ; et
- la Figure 7 est un schéma fonctionnel montrant une plateforme de service du réseau de télécommunication de la figure 1.

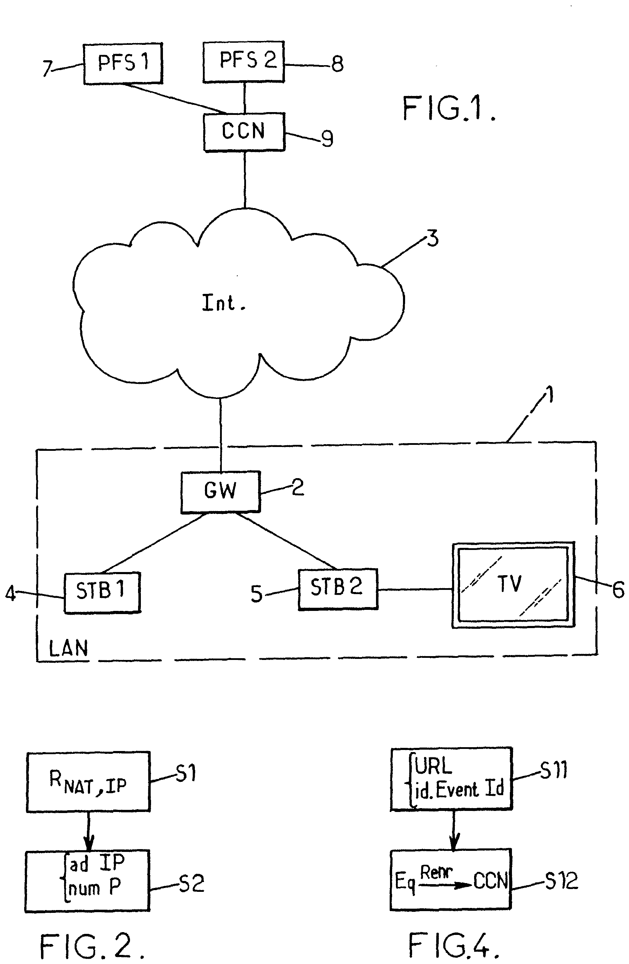

La figure 1 représente un réseau de télécommunication comportant un réseau privé ou LAN (Local Area Network) 1. Le réseau privé 1 comprend une passerelle Internet 2, par exemple de type Livebox, connectée au réseau Internet 3. Le réseau privé 1 comprend également un ensemble d'équipements, qui comporte par exemple un premier décodeur vidéo de type STB (pour « Set-Top Box ») 4 et un deuxième décodeur vidéo de type STB 5. Les équipements 4, 5 sont connectés à la passerelle Internet 2. Un poste de télévision 6 est par exemple connecté au deuxième décodeur STB 5.

La passerelle Internet 2 comporte un routeur NAT (Network Address Translation), qui a pour fonction de faire correspondre les adresses IP internes du réseau privé 1 à un ensemble d'adresses utilisables sur le réseau Internet 3.

Le réseau de télécommunication comporte notamment, hors du réseau privé 1, un ensemble de plateformes de service, qui comprend par exemple deux plateformes de service 7 et 8. Le réseau de télécommunication comporte également un serveur central de notification 9. Le serveur central de notification 9 comporte des moyens de stockage de données et des moyens de calcul. Les plateformes de service 7 et 8 sont connectées au serveur central de notification 9.

En se référant à la figure 2, on décrit un mode de réalisation d'un procédé d'initialisation d'un équipement, par exemple de l'équipement 4. Le procédé d'initialisation de l'équipement 5 est similaire. Le procédé d'initialisation est de préférence mis en oeuvre automatiquement lors de chaque initialisation réseau, c'est-à-dire à chaque démarrage de l'équipement 4, ou à chaque fois que l'équipement 4 et/ou la passerelle 2 changent d'adresse IP.

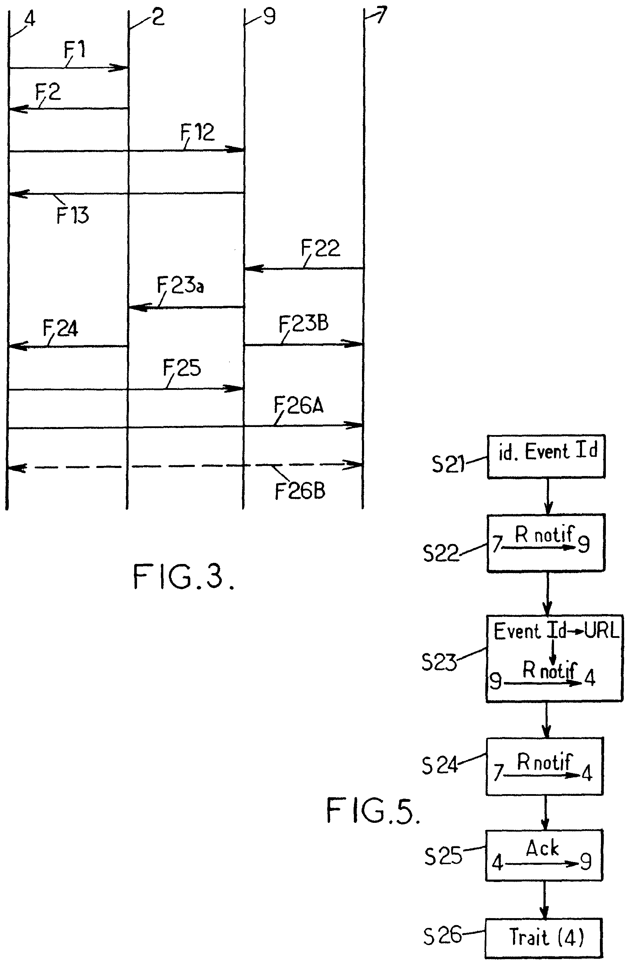

A l'étape S1, l'équipement 4 émet à destination de la passerelle Internet 2 une requête de configuration du routeur NAT et de détermination d'une adresse IP publique. L'étape S1 est symbolisée par la flèche F1 sur la figure 3.

A l'étape S2, la passerelle 2 répond à la requête en transmettant à l'équipement 4 un message contenant une adresse IP publique et un numéro de port. L'étape S2 est symbolisée par la flèche F2 sur la figure 3. Le message est par exemple transmis à l'aide du protocole réseau UPnP IGD (Universal Plug and Play - Internet Gateway Device).

L'équipement 4 mémorise l'adresse IP publique et le numéro de port, pour permettre la mise en oeuvre ultérieure d'un procédé d'enregistrement de l'équipement 4 à un service.

En se référant à la figure 4, on décrit un mode de réalisation du procédé d'enregistrement de l'équipement 4 à un service. Le procédé d'enregistrement de l'équipement 5 au service est similaire. Le procédé d'enregistrement est de préférence mis en oeuvre automatiquement lors de chaque initialisation réseau, c'est-à-dire à chaque démarrage de l'équipement 4, ou à chaque fois que l'équipement 4 et/ou la passerelle 2 changent d'adresse IP. Une interface Homme-Machine peut permettre à l'utilisateur de configurer l'équipement 4 pour empêcher l'enregistrement de l'équipement 4 au service, afin que l'équipement 4 ne reçoive plus de notifications associées au service.

A l'étape S11, l'équipement 4 détermine une adresse URL (Uniform Resource Locator) de joignabilité de l'équipement 4. L'adresse de joignabilité est par exemple formée à partir, d'une part, de l'adresse IP publique et du numéro de port obtenus à l'étape S2 du procédé d'initialisation, et, d'autre part, d'une partie aléatoire, que l'on appellera "chemin URL aléatoire".

On considère par exemple que l'adresse IP publique est 82.123.45.74, que le numéro de port est 6520 et que le chemin URL aléatoire est 4tr56d23sdf. L'adresse de joignabilité est alors de la forme : url=http://82.123.45.74:6520/4tr56d23sdf.html.

L'équipement 4 détermine également un identifiant, appelé identifiant EventId, caractérisant une paire formée par le service et par l'équipement 4. L'identifiant EventId est calculé à partir d'un élément caractérisant le service et d'un élément caractérisant l'équipement 4.

L'élément caractérisant le service est une chaine de caractères alpha numériques qui peut être un nom associé au service, par exemple le nom « call » si le service est un service d'appel entrant, le nom « pvr » si le service est un service d'enregistrement d'un programme TV, ou le nom « epg » si le service est un service de mise à jour d'un programme EPG (Electronic Program Guide), etc.

L'élément caractérisant l'équipement 4 est une chaîne de caractères alpha numériques qui caractérise l'équipement 4, par exemple une adresse e-mail d'utilisateur, une adresse MAC de l'équipement 4, un numéro de série de l'équipement 4, un numéro de téléphone d'une ligne téléphonique associée à l'équipement 4, ou un identifiant d'utilisateur.

Les éléments caractérisant respectivement le service et l'équipement 4 sont concaténés, c'est-à-dire mis bout à bout. Puis, une fonction de hachage, par exemple une fonction de type MD5 (Message Digest 5), est appliquée aux éléments concaténés. La fonction de hachage calcule, à partir de la donnée fournie en entrée, c'est-à-dire à partir des éléments concaténés, une empreinte permettant d'identifier la donnée d'entrée. Le résultat de la fonction de hachage, c'est-à-dire l'empreinte, constitue ici l'identifiant EventId.

A l'étape S12, l'équipement 4 émet, à destination du serveur central de notification 9, une requête d'enregistrement à un service (par exemple au service "pvr" d'enregistrement d'un programme TV, comme cela sera décrit plus loin). La requête comporte l'identifiant EventId et l'adresse de joignabilité. L'étape S12 est symbolisée sur la figure 3 par la flèche F12.

A l'étape S13, le serveur central 9 accuse réception de la requête transmise par l'équipement 4, comme symbolisé par la flèche F13 sur la figure 3. Le serveur central 9 mémorise dans une base de données l'identifiant EventId et l'adresse de joignabilité correspondante, de manière à pouvoir utiliser ultérieurement la relation entre l'identifiant EventId et l'adresse de joignabilité pour la transmission d'une notification.

Si l'équipement 4 doit être enregistré à plusieurs services, les étapes S11 à S13 sont répétées, afin de mémoriser dans la base de données du serveur central de notification 9 tous les couples identifiant EventId-adresse de joignabilité nécessaires.

On notera que, dans ce cas, il n'est pas nécessaire d'utiliser une autre adresse IP publique et/ou un autre numéro de port pour ouvrir un deuxième chemin réseau. En effet, il est possible de réutiliser la même adresse IP publique et le même numéro de port et de changer le chemin URL aléatoire. Dans l'exemple, l'adresse de joignabilité de l'équipement 4 pour l'enregistrement à un autre service est alors de la forme : url=http://82.123.45.74:6520/d2f6df5sd2f8.html.

En se référant à la figure 5, on décrit un procédé de notification. Ce procédé est mis en oeuvre pour transmettre, depuis une plateforme de service, par exemple la plateforme de service 7, une notification à un ou plusieurs équipement(s) destinataire(s).

A l'étape S21, la plateforme 7 détermine un identifiant EventId, qui caractérise une paire formée par le service et par la cible, c'est-à-dire le ou les destinataire(s) de la notification. L'identifiant EventId est calculé à partir d'un élément caractérisant le service et d'un élément caractérisant la cible.

L'élément caractérisant le service est, comme à l'étape S11, une chaine de caractères alpha numériques qui peut être un nom associé au service, par exemple le nom « call » si le service est un service d'appel entrant, le nom « pvr » si le service est un service d'enregistrement d'un programme TV, ou le nom « epg » si le service est un service de mise à jour d'un programme EPG (Electronic Program Guide), etc.

L'élément caractérisant la cible est une chaîne de caractères alpha numériques qui caractérise la cible, par exemple une adresse e-mail, une adresse MAC, un numéro de série, un numéro de téléphone, ou un identifiant utilisateur.

L'élément caractérisant la cible, utilisé à l'étape S21, doit être du même type que l'élément caractérisant la cible utilisé à l'étape S11 du procédé d'enregistrement. Par exemple, si l'identifiant EventId a été déterminé à l'étape S11 à partir d'une adresse MAC (Media Access Control) de l'équipement 4, la plateforme doit également déterminer un identifiant EventId à partir d'une adresse MAC à l'étape S21. De même, si l'identifiant EventId a été déterminé à partir d'une adresse e-mail d'utilisateur à l'étape S11, la plateforme doit également déterminer un identifiant EventId à partir de la même adresse e-mail d'utilisateur à l'étape S21.

La détermination ou l'obtention de l'élément caractérisant la cible par la plateforme 7 peut être réalisée de différentes manières. A titre d'exemples illustratifs, la plateforme 7 pourrait obtenir cet élément caractérisant la cible :
- auprès d'un composant ou outil centralisé d'identification du réseau, auprès duquel l'utilisateur se serait identifié pour accéder à la plateforme de service 7, ou
- par identification de l'utilisateur directement auprès de la plateforme de service 7.

A l'étape S22, la plateforme 7 envoie au serveur central de notification 9 un message de notification contenant l'identifiant EventId. L'étape S22 est symbolisée sur la figure 3 par la flèche F22. Le protocole de transport utilisé est par exemple le protocole http (HyperText Transfer Protocol).

A l'étape S23, le serveur central 9 reçoit le message de notification et transmet un accusé de réception à la plateforme 7, comme symbolisé par la flèche F23B sur la figure 3.

Le serveur central 9 recherche dans la base de données un ou plusieurs identifiant (s) EventId identiques à l'identifiant EventId présent dans le message de notification reçu à l'étape S22. Puis, le serveur central 9 détermine, à l'aide de la base de données, une adresse de joignabilité correspondant à chaque identifiant EventId identique trouvé.

Le serveur central 9 retransmet ensuite le message de notification reçu à l'ensemble des destinataires, en utilisant les adresses de joignabilité et ici le protocole http. L'adresse de destination du message de notification retransmis vers l'équipement 4 par le serveur 9 est @IP = 82.123.45.74 port=6520. Cette transmission est symbolisée par la flèche F23A sur la figure 3. On considère dans l'exemple que l'équipement 4 est le seul destinataire du message.

A l'étape S24, la passerelle 2 reçoit le message de notification en provenance du serveur central 9, et le retransmet au(x) destinataire(s) du réseau privé, par exemple à l'équipement 4, en utilisant le port dont le numéro est présent dans l'adresse de joignabilité. Cette transmission est symbolisée par la flèche F24 sur la figure 3.

A l'étape S25, l'équipement 4 reçoit le message, vérifie que la partie aléatoire de l'adresse de joignabilité utilisée par le serveur central 9 correspond bien à celle fournie lors de l'enregistrement au service et transmet au serveur central 9 un accusé de réception, comme symbolisé par la flèche F25 sur la figure 3. Dans l'exemple particulier décrit ici, une fois qu'il a reçu le message de notification, l'équipement 4 réitère les étapes S11 à S13 en fournissant au serveur 9 une nouvelle adresse de joignabilité, différant de la précédente par une nouvelle partie aléatoire. La partie aléatoire de l'url de joignabilité permet ainsi de fournir un jeton à usage unique, c'est-à-dire valable pour une unique notification. Après avoir reçu la notification, l'équipement 4 fournit au serveur 9 une adresse de joignabilité ayant une nouvelle partie aléatoire. Cela permet de sécuriser le processus de notification en évitant le rejeu d'une notification par un tiers malveillant.

A l'étape S26, l'équipement 4 traite le message. Le traitement peut comprendre l'établissement d'une communication, à l'initiative de l'équipement 4, avec la plateforme de service 7 puis l'échange de données entre l'équipement 4 et la plateforme de service 7, comme symbolisé par les flèches F26A et F26B sur la figure 3.

Ce procédé de notification permet notamment de notifier tous les équipements de la maison simultanément. En effet, si un service de magnétoscope numérique de type PVR (Personal Video Recorder), hébergé dans la plateforme de service 7, utilise l'adresse e-mail de l'utilisateur comme élément caractérisant la cible pour la détermination de l'identifiant EventId, et si plusieurs décodeurs STB 4, 5 de la maison ont été enregistrés à ce service en utilisant l'adresse e-mail de l'utilisateur comme élément les caractérisant, alors le procédé de notification permet de notifier simultanément tous les décodeurs STB 4, 5.

De même, si un service d'actualité de type 24/24Actu, par exemple hébergé dans la plateforme de service 8, souhaite notifier tous les équipements Orange d'un nouvel événement d'actualité, alors le service 24/24actu choisit une chaine alpha numérique vide comme élément caractérisant la cible. Ainsi, tous les équipements Orange inscrits au service 24/24actu seront notifiés simultanément. On notera que pour cela les équipements doivent avoir été enregistrés à ce service avec une chaîne alpha numérique vide comme élément les caractérisant.

Il est ainsi possible de réaliser une notification multicast de manière simple en utilisant l'identifiant EventId comme clé de routage intelligente.

On décrit ci-dessous un exemple particulier d'application du procédé de notification à la programmation d'un enregistrement à distance (PVR pour « Personal Video Recorder ») par le décodeur STB 5. On suppose ici que la plateforme de service 7 héberge un service de guide des programmes EPG, et que la plateforme de service 8 héberge un service d'enregistrement à distance PVR.

Préalablement à la mise en oeuvre du procédé de notification, le décodeur STB 4 est initialisé et enregistré au service d'enregistrement à distance PVR, selon les procédés d'initialisation et d'enregistrement décrits plus haut.

En particulier, à l'étape S11 du procédé d'enregistrement, l'identifiant EventId est calculé en appliquant la fonction de hachage à la concaténation de la chaîne de caractères « pvr » comme élément caractérisant l'événement à notifier, et d'un identifiant de l'utilisateur possédant le décodeur STB 4 comme élément caractérisant le décodeur STB 4.

Le procédé de notification est mis en oeuvre en réponse à une commande de l'utilisateur. Plus précisément, l'utilisateur, qui souhaite programmer son décodeur STB 4 alors qu'il n'est pas chez lui, se connecte à un site Internet permettant d'accéder au service, par exemple au site www.orange.fr. Sur le site Internet, l'utilisateur s'authentifie de façon classique auprès d'un outil d'authentification, par exemple de type WassUp, qui est relié à une base de données centrale du service, dans l'exemple la base de données centrale Orange. Après authentification, l'utilisateur accède au guide des programmes (EPG) stocké dans la plateforme d'application 7. L'utilisateur sélectionne un programme. La plateforme 7 peut émettre un message demandant à l'utilisateur s'il souhaite programmer l'enregistrement de ce programme. L'utilisateur accepte.

La plateforme EPG 7 émet alors une requête d'enregistrement d'un programme à destination de la plateforme de service PVR 8 gérant le service d'enregistrement à distance. La transmission utilise par exemple le protocole http. La requête d'enregistrement d'un programme contient des données d'information relatives à la demande d'enregistrement du programme sélectionné (par exemple horaires, chaîne et identifiant de programme), ainsi qu'un identifiant de l'utilisateur, fourni par l'outil d'authentification WassUp.

La plateforme de service PVR 8 reçoit la requête et stocke les informations présentes dans la requête (informations relatives au programme à enregistrer et identifiant d'utilisateur) dans une base de données de la plateforme PVR 8. Le procédé de notification, tel que précédemment décrit, est alors mis en oeuvre par la plateforme PVR 8.

A l'étape S21, la plateforme de service PVR 8 détermine un identifiant EventId en appliquant la fonction de hachage à la chaîne de caractère « pvr », correspondant à l'événement à notifier, et à l'identifiant de l'utilisateur, correspondant à la cible.

A l'étape S22, la plateforme de service PVR 8 transmet au serveur de notification 9 un message de notification contenant l'identifiant EventId.

A l'étape S23, le serveur de notification 9 reçoit le message de notification et détermine, à partir de l'identifiant EventId, l'adresse de joignabilité du destinataire, c'est-à-dire l'adresse de joignabilité du décodeur STB 4. Puis, le serveur de notification 9 utilise l'adresse de joignabilité pour retransmettre le message de notification, comprenant des données relatives à l'objet de la notification, au décodeur STB 4.

A l'étape S24, la passerelle 2 du réseau privé 1 comprenant le décodeur STB 4 reçoit le message, et la transmet au décodeur STB 4.

A l'étape S25, le message est reçu par le décodeur STB 4 qui transmet en réponse un accusé de réception au serveur de notification 9.

A l'étape S26, le décodeur STB 4 traite le message. En l'espèce, comme il s'agit de la notification d'un événement d'enregistrement à distance, le décodeur STB 4 extrait du message reçu l'adresse URL de la plateforme de service PVR 8, se connecte à la plateforme de service PVR 8, fournit son identifiant, c'est-à-dire l'identifiant de l'utilisateur, et récupère les informations relatives à la demande d'enregistrement de programme, préalablement stockées.

L'enregistrement du programme peut ainsi être programmé à distance et de manière simple, tout en garantissant, par l'authentification, que l'utilisateur ayant commandé la programmation est bien le propriétaire du décodeur STB 4.

Le serveur central de notification 9 et les plateformes de service 7, 8 sont agencés pour mettre en oeuvre les étapes du procédé de notification précédemment décrit.

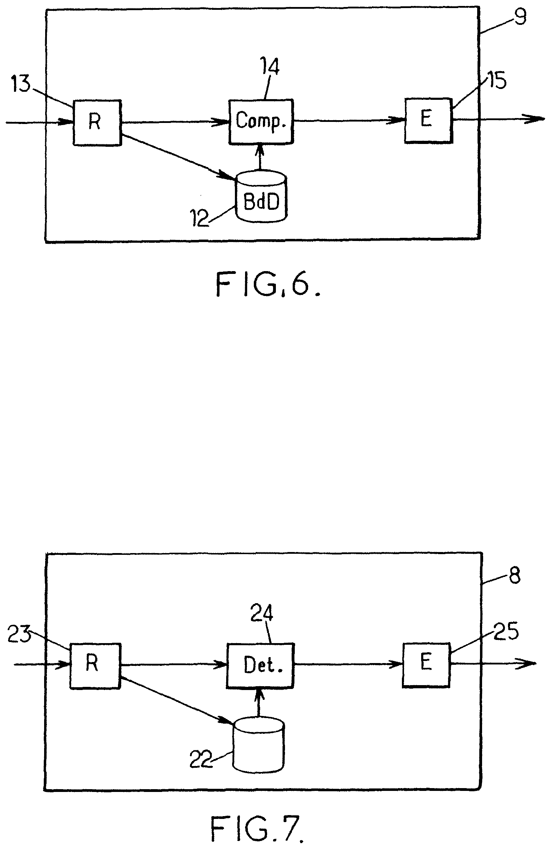

En se référant à la figure 6, le serveur central de notification 9 comporte une base de données 12, dans laquelle sont mémorisés des identifiants EventId et des adresses de joignabilité associées.

Le serveur central de notification 9 comporte également des moyens de réception 13 configurés pour recevoir, par exemple de la plateforme de service 7 ou 8, un identifiant EventId.

Le serveur central de notification 9 comporte également des moyens de comparaison 14 configurés pour comparer un identifiant EventId reçu de la plateforme de service 7, 8 avec les identifiants EventId mémorisés dans la base de données 12, pour déterminer une adresse de joignabilité associée à un identifiant EventId mémorisé correspondant à l'identifiant EventId reçu.

Le serveur central de notification 9 comporte également des moyens de transmission 15 configurés pour transmettre un message de notification à destination de l'équipement 4, 5 présentant l'adresse de joignabilité.

En se référant à la figure 7, la plateforme de service 8 comporte une mémoire 22 pour mémoriser des données reçues, et des moyens de réception 23 configurés pour recevoir une requête, par exemple une requête d'enregistrement d'un programme émise par la plateforme de service 7.

La plateforme de service 8 comporte également des moyens de détermination 24 configurés pour déterminer un identifiant EventId caractérisant une paire formée par le service hébergé dans la plateforme 8 et par au moins un équipement destinataire 4, 5.

La plateforme de service 8 comporte également des moyens de transmission 25 configurés pour transmettre l'identifiant EventId au serveur central de notification 9.

La plateforme de service 7 est similaire à la plateforme de service 8.

L'identifiant EventId présente notamment l'avantage d'être flexible, ouvert et évolutif. En effet, la façon dont on génère un identifiant EventId est indépendante des autres étapes des procédés d'enregistrement et de notification, ce qui permet d'utiliser l'identifiant EventId avec différents procédés d'enregistrement et de notification.

De plus, le choix de l'identifiant EventId est libre, c'est-à-dire que de nouveaux identifiants peuvent être ajoutés sans perturber le fonctionnement général. Il est également facile d'ajouter de nouveaux services sans impact sur le fonctionnement général.

Tous les équipements peuvent être notifiés à partir du moment où ils intègrent la logique fonctionnelle.

De plus, en disposant un serveur central de notification dans le coeur de réseau de l'opérateur, l'impact sur les plateformes de service est réduit, car les étapes complexes (notamment la gestion des aspects réseau d'accès à l'équipement, par exemple la traversée du routeur NAT) sont déléguées au serveur central.

La sécurité est également améliorée, car une seule ouverture du routeur NAT de la passerelle est nécessaire pour permettre une communication du serveur central vers le terminal. Il est ainsi possible d'avoir un unique port ouvert, vers un unique serveur, à savoir le serveur central de notification. A titre comparatif, avec les procédés de notification connus, il est nécessaire de réaliser une ouverture d'une pluralité de ports pour permettre la communication depuis les différentes plateformes de service.

Bien entendu, la présente invention ne se limite pas aux formes de réalisation décrites ci-avant à titre d'exemples ; elle s'étend à d'autres variantes.

Par exemple, l'invention n'est pas limitée à la transmission de notifications dans le cadre du déploiement des offres TV par internet, et peut être appliquée à la transmission de tout type de notification de terminaux disposés derrières des passerelles résidentiels.

## Revendications

1. Procédé de traitement de données pour la notification d'au moins un équipement (4, 5) d'un réseau privé (1), connecté à un réseau externe (3) via une passerelle locale (2), comprenant des étapes :
dans une plateforme de service (7, 8) hébergeant un service :
a) déterminer un identifiant caractérisant une paire formée par ledit service et au moins un équipement destinataire, et
b) transmettre l'identifiant déterminé à un serveur central de notification (9) comportant une base de données, dans laquelle sont mémorisés des identifiants et des adresses de joignabilité associées,
dans ledit serveur central de notification (9) :
c) comparer ledit identifiant reçu de la plateforme de service (7, 8) auxdits identifiants mémorisés dans ladite base de données, pour déterminer une adresse de joignabilité associée à un identifiant mémorisé correspondant à l'identifiant reçu, et
d) transmettre un message de notification, à travers le réseau externe, à l'équipement (4, 5) présentant ladite adresse de joignabilité.

2. Procédé selon la revendication 1, **caractérisé en ce qu'**un identifiant est déterminé par l'application d'une fonction de hachage à la concaténation d'une chaine de caractères alpha numériques caractérisant un service et d'une chaîne de caractères alpha numériques caractérisant un équipement (4, 5).

3. Procédé selon la revendication 1, **caractérisé en ce que** ladite passerelle locale(2) comporte un routeur NAT permettant de faire correspondre des adresses IP internes dudit réseau privé (1) à un ensemble d'adresses utilisables sur le réseau externe (3), le procédé comprenant une étape préalable d'initialisation de l'équipement (4, 5), comportant une opération de mémorisation dans ledit équipement d'une adresse IP publique et d'un numéro de port, de la passerelle locale.

4. Procédé selon la revendication 3, **caractérisé en ce qu'**il comprend une étape préalable d'enregistrement dudit équipement (4, 5) au service hébergé par ladite plateforme de service (7, 8), l'étape d'enregistrement comportant une opération de détermination, dans ledit équipement, d'une adresse de joignabilité de l'équipement, et d'un identifiant caractérisant une paire formée par ledit service et par ledit équipement, une opération d'émission depuis l'équipement (4, 5), à destination dudit serveur central de notification (9), d'une requête d'enregistrement au service comportant ledit identifiant déterminé et ladite adresse de joignabilité.

5. Procédé selon la revendication 4, **caractérisé en ce que** ladite adresse de joignabilité est formée à partir d'une adresse IP publique, d'un numéro de port, et d'une partie aléatoire.

6. Procédé selon la revendication 5, **caractérisé en ce que** l'adresse de joignabilité est une adresse url.

7. Procédé selon la revendication 1, **caractérisé en ce qu'**il est mis en oeuvre en réponse à une commande d'un utilisateur, ladite commande étant transmise à la plateforme de service via le réseau externe.

8. Procédé selon la revendication 1, **caractérisé en ce qu'**il comprend une opération préalable d'authentification dudit utilisateur auprès d'un outil d'authentification.

9. Procédé selon la revendication 1, **caractérisé en ce que** ledit équipement est un premier équipement, l'identifiant déterminé à l'étape a) caractérisant, outre ledit premier équipement, un deuxième équipement, l'étape c) comportant en outre la détermination d'une deuxième adresse de joignabilité pour ledit deuxième équipement, et l'étape d) comportant en outre la transmission de la notification à destination dudit deuxième équipement en utilisant ladite deuxième adresse de joignabilité.

10. Programme informatique comportant des instructions pour la mise en oeuvre du procédé de notification selon la revendication 1 lorsque ce programme est exécuté par un processeur.

11. Serveur central de notification (9) comportant :
- une base de données, dans laquelle sont mémorisés des identifiants et des adresses de joignabilité associées, un identifiant mémorisé caractérisant une paire formée par un service et par un équipement,
- des moyens de réception configurés pour recevoir, d'une plateforme de service (7, 8), un identifiant caractérisant une paire formée par un service et par un au moins un équipement destinataire,
- des moyens de comparaison configurés pour comparer un identifiant reçu de la plateforme de service avec lesdits identifiants mémorisés dans ladite base de données, pour déterminer une adresse de joignabilité associée à un identifiant mémorisé correspondant à l'identifiant reçu, et
- des moyens de transmission configurés pour transmettre un message de notification à destination de l'équipement (4, 5) présentant ladite adresse de joignabilité.

12. Système comportant :
- un serveur central de notification (9) selon la revendication 11,
- un équipement (4, 5) d'un réseau privé (1), connecté à un réseau externe (3) via une passerelle locale (2), et
- une plateforme de service (7, 8) hébergeant un service et comportant :
des moyens de détermination configurés pour déterminer un identifiant caractérisant une paire formée par ledit service et par au moins un équipement destinataire, et
des moyens de transmission configurés pour transmettre ledit identifiant déterminé à destination dudit serveur central de notification.

13. Système selon la revendication 12, dans lequel l'équipement (4, 5) comporte des moyens pour être connecté à la passerelle locale (2) du réseau privé (1), et, via le réseau externe (3), à la plateforme de service (7, 8), l'équipement comprenant :
- des moyens de mémorisation d'une adresse IP publique et d'un numéro de port de la passerelle locale (2),
- des moyens de détermination :
∘ d'une adresse de joignabilité de l'équipement formée à partir de ladite adresse IP publique, dudit numéro de port et d'une partie aléatoire, et
∘ d'un identifiant caractérisant une paire formée par ledit service et par ledit équipement, et
- des moyens de transmission, à destination du serveur central de notification, d'une requête d'enregistrement audit service, la requête contenant l'adresse de joignabilité et l'identifiant.

## Patentansprüche

1. Verfahren zur Verarbeitung von Daten zur Benachrichtigung mindestens einer Vorrichtung (4, 5) eines privaten Netzwerks (1), das über einen lokalen Gateway (2) mit einem externen Netzwerk (3) verbunden ist, umfassend die Schritte:
in einer Dienstplattform (7, 8), die einen Dienst beherbergt:
a) Bestimmen einer Kennung, die ein Paar kennzeichnet, das von dem Dienst und mindestens einer Zielvorrichtung gebildet wird, und
b) Übertragen der bestimmten Kennung an einen zentralen Benachrichtigungsserver (9), der eine Datenbank umfasst, in der Kennungen und zugehörige Erreichbarkeitsadressen gespeichert sind,
in dem zentralen Benachrichtigungsserver (9):
c) Vergleichen der Kennung, die von der Dienstplattform (7, 8) empfangen wird, mit den in der Datenbank gespeicherten Kennungen, um eine Erreichbarkeitsadresse zu bestimmen, die mit einer gespeicherten Kennung in Verbindung steht, die der empfangenen Kennung entspricht, und
d) Übertragen einer Benachrichtigungsnachricht über das externe Netzwerk an die Vorrichtung (4, 5), die die Erreichbarkeitsadresse aufweist.

2. Verfahren nach Anspruch 1, **dadurch gekennzeichnet, dass** eine Kennung durch Anwendung einer Hash-Funktion auf die Verkettung einer Kette alphanumerischer Zeichen, die einen Dienst kennzeichnet, und einer Kette alphanumerischer Zeichen, die eine Vorrichtung (4, 5) kennzeichnet, bestimmt wird.

3. Verfahren nach Anspruch 1, **dadurch gekennzeichnet, dass** der lokale Gateway (2) einen NAT-Router umfasst, der es erlaubt, interne IP-Adressen des privaten Netzwerks (1) mit einem Satz von Adressen, die im externen Netzwerk (3) benutzbar sind, in Übereinstimmung zu bringen, das Verfahren umfassend einen vorigen Schritt der Initialisierung der Vorrichtung (4, 5), umfassend einen Vorgang der Speicherung einer öffentlichen IP-Adresse und einer Portnummer des lokalen Gateways in der Vorrichtung.

4. Verfahren nach Anspruch 3, **dadurch gekennzeichnet, dass** es einen vorigen Schritt der Registrierung der Vorrichtung (4, 5) bei dem Dienst umfasst, der von der Dienstplattform (7, 8) beherbergt wird, der Schritt der Registrierung umfassend einen Vorgang des Bestimmens, in der Vorrichtung, einer Erreichbarkeitsadresse der Vorrichtung und einer Kennung, die ein Paar kennzeichnet, das von dem Dienst und der Vorrichtung gebildet wird, einen Vorgang des Sendens einer Anfrage zur Registrierung bei dem Dienst, umfassend die bestimmte Kennung und die Erreichbarkeitsadresse, von der Vorrichtung (4, 5) an den zentralen Benachrichtigungsserver (9).

5. Verfahren nach Anspruch 4, **dadurch gekennzeichnet, dass** die Erreichbarkeitsadresse anhand einer öffentlichen IP-Adresse, einer Portnummer und eines Zufallsteils gebildet wird.

6. Verfahren nach Anspruch 5, **dadurch gekennzeichnet, dass** die Erreichbarkeitsadresse eine URL-Adresse ist.

7. Verfahren nach Anspruch 1, **dadurch gekennzeichnet, dass** es in Reaktion auf einen Befehl eines Benutzers umgesetzt wird, wobei der Befehl über das externe Netzwerk an die Dienstplattform übertragen wird.

8. Verfahren nach Anspruch 1, **dadurch gekennzeichnet, dass** es einen vorhergehenden Vorgang der Authentifizierung des Benutzers bei einem Authentifizierungstool umfasst.

9. Verfahren nach Anspruch 1, **dadurch gekennzeichnet, dass** die Vorrichtung eine erste Vorrichtung ist, wobei die bei Schritt a) bestimmte Kennung neben der ersten Vorrichtung eine zweite Vorrichtung kennzeichnet, der Schritt c) ferner das Bestimmen einer zweiten Erreichbarkeitsadresse für die zweite Vorrichtung umfasst, und der Schritt d) ferner das Übertragen der Benachrichtigung an die zweite Vorrichtung mithilfe der zweiten Erreichbarkeitsadresse umfasst.

10. Computerprogramm umfassend Anweisungen für die Umsetzung des Benachrichtigungsverfahrens nach Anspruch 1, wenn dieses Programm von einem Prozessor ausgeführt wird.

11. Zentraler Benachrichtigungsserver (9), umfassend:
- eine Datenbank, in der Kennungen und zugehörige Erreichbarkeitsadressen gespeichert sind, wobei eine gespeicherte Kennung ein Paar kennzeichnet, das von einem Dienst und von einer Vorrichtung gebildet wird,
- Empfangsmittel, die ausgelegt sind, von einer Dienstplattform (7, 8) eine Kennung zu empfangen, die ein Paar kennzeichnet, das von einem Dienst und von mindestens einer Zielvorrichtung gebildet wird,
- Vergleichsmittel, die ausgelegt sind, eine Kennung, die von der Dienstplattform empfangen wird, mit den in der Datenbank gespeicherten Kennungen zu vergleichen, um eine Erreichbarkeitsadresse zu bestimmen, die mit einer gespeicherten Kennung in Verbindung steht, die der empfangenen Kennung entspricht, und
- Mittel zur Übertragung, die ausgelegt sind, eine Benachrichtigungsnachricht über das externe Netzwerk an die Vorrichtung (4, 5) zu übertragen, die die Erreichbarkeitsadresse aufweist.

12. System, umfassend:
- einen zentralen Benachrichtigungsserver (9) nach Anspruch 11,
- eine Vorrichtung (4, 5) eines privaten Netzwerks (1), das über einen lokalen Gateway (2) mit einem externen Netzwerk (3) verbunden ist, und
- eine Dienstplattform (7, 8), die einen Dienst beherbergt und Folgendes umfasst:
Mittel zum Bestimmen, die ausgelegt sind, eine Kennung zu bestimmen, die ein Paar kennzeichnet, das von dem Dienst und von mindestens einer Zielvorrichtung gebildet wird, und
Mittel zur Übertragung, die ausgelegt sind, die bestimmte Kennung an den zentralen Benachrichtigungsserver zu übertragen.

13. System nach Anspruch 12, wobei die Vorrichtung (4, 5) Mittel umfasst, um mit dem lokalen Gateway (2) des privaten Netzwerks (1) und über das externe Netzwerk (3) mit der Dienstplattform (7, 8) verbunden zu sein, die Vorrichtung umfassend:
- Mittel zum Speichern einer öffentlichen IP-Adresse und einer Portnummer des lokalen Gateways (2),
- Mittel zum Bestimmen:
∘ einer Erreichbarkeitsadresse der Vorrichtung, die anhand der öffentlichen IP-Adresse, der Portnummer und eines Zufallsteils gebildet wird, und
∘ einer Kennung, die ein Paar kennzeichnet, das von dem Dienst und von der Vorrichtung gebildet wird, und
- Mittel zur Übertragung einer Anfrage zur Registrierung bei dem Dienst an den zentralen Benachrichtigungsserver, wobei die Anfrage die Erreichbarkeitsadresse und die Kennung enthält.

## Claims

1. Method for processing data for the notification of at least one equipment item (4, 5) of a private network (1), connected to an external network (3) via a local gateway (2), comprising steps:
in a service platform (7, 8) hosting a service:
a) of determining an identifier characterizing a pair formed by said service and at least one destination equipment item, and
b) of transmitting the determined identifier to a central notification server (9) comprising a database, in which are stored identifiers and associated reachability addresses,
in said central notification server (9):
c) of comparing said identifier received from the service platform (7, 8) to said identifiers stored in said database, to determine a reachability address associated with a stored identifier corresponding to the received identifier, and
d) of transmitting a notification message, through the external network, to the equipment item (4, 5) having said reachability address.

2. Method according to Claim 1, **characterized in that** an identifier is determined by the application of a hash function to the concatenation of a string of alphanumeric characters characterizing a service and a string of alphanumeric characters characterizing an equipment item (4, 5).

3. Method according to Claim 1, **characterized in that** said local gateway (2) comprises an NAT router making it possible to match internal IP addresses of said private network (1) to a set of addresses that can be used on the external network (3), the method comprising a preliminary step of initialization of the equipment item (4, 5), comprising an operation of storage in said equipment item of a public IP address and of a port number, of the local gateway.

4. Method according to Claim 3, **characterized in that** it comprises a preliminary step of registration of said equipment item (4, 5) with the service hosted by said service platform (7, 8), the registration step comprising an operation of determination, in said equipment item, of a reachability address of the equipment item, and of an identifier characterizing a pair formed by said service and by said equipment item, an operation of transmission, from the equipment item (4, 5), to said central notification server (9), of a request for registration to the service comprising said determined identifier and said reachability address.

5. Method according to Claim 4, **characterized in that** said reachability address is formed from a public IP address, a port number, and a random part.

6. Method according to Claim 5, **characterized in that** the reachability address is a URL address.

7. Method according to Claim 1, **characterized in that** it is implemented in response to a command from a user, said command being transmitted to the service platform via the external network.

8. Method according to Claim 1, **characterized in that** it comprises a preliminary operation of authentication of said user with an authentication tool.

9. Method according to Claim 1, **characterized in that** said equipment item is a first equipment item, the identifier determined in the step a) **characterizing, in** addition to said first equipment item, a second equipment item, the step c) further comprising the determination of a second reachability address for said second equipment item, and the step d) further comprising the transmission of the notification to said second equipment item by using said second reachability address.

10. Computer program comprising instructions for implementing the notification method according to Claim 1 when this program is run by a processor.

11. Central notification server (9) comprising:
- a database, in which are stored identifiers and associated reachability addresses, a stored identifier characterizing a pair formed by a service and by an equipment item,
- reception means configured to receive, from a service platform (7, 8), an identifier characterizing a pair formed by a service and by at least one destination equipment item,
- comparison means configured to compare an identifier received from the service platform with said identifiers stored in said database, to determine a reachability address associated with a stored identifier corresponding to the received identifier, and
- transmission means configured to transmit a notification message to the equipment item (4, 5) having said reachability address.

12. System comprising:
- a central notification server (9) according to Claim 11,
- an equipment item (4, 5) of a private network (1), connected to an external network (3) via a local gateway (2), and
- a service platform (7, 8) hosting a service and comprising:
determination means configured to determine an identifier characterizing a pair formed by said service and by at least one destination equipment item, and
transmission means configured to transmit said determined identifier to said central notification server.

13. System according to Claim 12, in which the equipment item (4, 5) comprises means for being connected to the local gateway (2) of the private network (1), and, via the external network (3), to the service platform (7, 8), the equipment item comprising:
- means for storing a public IP address and a port number of the local gateway (2),
- means for determining:
∘ a reachability address of the equipment item formed from said public IP address, said port number and a random part, and
∘ an identifier characterizing a pair formed by said service and by said equipment item, and
- means for transmitting, to the central notification server, a request for registration to said service, the request containing the reachability address and the identifier.
